# EUROPEAN PATENT APPLICATION

(11) **EP 4 848 218 A2**
(43) Date of publication of application: **02.12.2026**
(21) Application number: 25716960.7
(22) Date of filing: 21.01.2025
(51) Int. Cl.: G06T 15/00

(54) **METHOD FOR ESTIMATING POSES OF MULTIPLE TARGETS, ROBOT CONTROL METHOD AND SYSTEM, AND PRODUCT**

(30) Priority: 25.01.2024 WO PCT/CN2024/073943
(71) Applicant: WENZHOU UNIVERSITY ARTIFICIAL INTELLIGENCE AND ADVANCED MANUFACTURING INSTITUTE (YONGJIA), Zhejiang 325100 (CN); Lai, Xuanyao, Wenzhou, Zhejiang 325100 (CN)
(72) Inventor: TANG, Zhengmi, Wenzhou, Zhejiang 325100 (CN); NI, Mingyang, Wenzhou, Zhejiang 325100 (CN); YIN, Chongxuan, Wenzhou, Zhejiang 325100 (CN); KIM, Kimin, Wenzhou, Zhejiang 325100 (CN); TEERAPITTAYANON, Surat, Wenzhou, Zhejiang 325100 (CN); LAI, Xuanyao, Wenzhou, Zhejiang 325100 (CN)
(74) Representative: Mewburn Ellis LLP
(86) International application number: PCT/CN2025/073614
(87) International publication number: WO 2025/073306

(57) **Abstract**

Disclosed are a method for estimating the poses of multiple targets, a robot control method and system, and a product. The method for estimating the poses of multiple targets comprises: acquiring real-time video data, which comprises first image frames of multiple targets (S11); obtaining first high-dimensional segmented pixel data on the basis of the first image frames (S12); performing rendering on three-dimensional models of the multiple targets on the basis of a first preset pose, so as to obtain first high-dimensional data (S13); and updating the first preset pose on the basis of the minimization of an error between the first high-dimensional segmented pixel data and the first high-dimensional data (S14).

## Description

### CROSS-REFERENCE TO RELATED APPLICATION

This application claims priority to PCT Application PCT/CN2024/073943, filed on January 25, 2024, and entitled "ROBOT CONTROL BASED ON REAL-TIME ENVIRONMENT DIGITAL TWIN RECONSTRUCTION". The PCT Application PCT/CN2024/073943 is incorporated herein by reference in its entirety.

### FIELD

The present disclosure relates to the fields of computer image processing, and more particularly to a method for estimating poses of multiple objects, a method for controlling a robot, a system, and a product.

### BACKGROUND

Taking U.S. Patent No. US10565747B2 and U.S. Patent No. US10565747B2 as examples, US10565747B2 describes a scheme for performing pose estimation of an object in a static image using a particle filter and an auto encoder, and US10565747B2 describes establishing a differentiable rendering pipeline for a given static two-dimensional image data input. However, the prior art lacks a method for performing pose estimation on a plurality of objects in a complex environment, which cannot satisfy the demand for high-precision control of robots.

### SUMMARY

The technical problem to be solved by the present disclosure is to overcome the above-mentioned defects in the prior art, and to provide a method for estimating poses of multiple objects, a method for controlling a robot, a system, and a product.

The present disclosure solves the above-mentioned technical problem through the following technical solutions:

The present disclosure provides a method for estimating poses of multiple objects, the method comprising:
obtaining real-time video data comprising a first image frame of the multiple objects;
obtaining, based on the first image frame, first high-dimensional segmented pixel data, the first high-dimensional segmented pixel data comprising first pixel data of each object, the first pixel data being a three-dimensional or higher-dimensional array;
performing, based on a first preset pose, differentiable rendering on a three-dimensional model of the multiple objects to obtain first high-dimensional data, the first high-dimensional data being a three-dimensional or higher-dimensional array; and
updating, based on minimizing an error between the first high-dimensional segmented pixel data and the first high-dimensional data, the first preset pose to obtain a first object pose.

Preferably, the real-time video data further comprises at least a second image frame of the multiple objects;
after the step of obtaining the object pose, the method further comprises:
obtaining, based on the second image frame, second high-dimensional segmented pixel data;
performing, based on the first object pose, differentiable rendering on the three-dimensional model of the multiple objects to obtain second high-dimensional data, the second high-dimensional data being a three-dimensional or higher-dimensional array;
updating, based on minimizing an error between the second high-dimensional segmented pixel data and the second high-dimensional data, the first object pose to obtain a second object pose; and
sequentially updating, based on other image frames of the real-time video data, a pose corresponding to a previous image frame to obtain other object poses.

Preferably, the step of obtaining, based on the first image frame, first high-dimensional segmented pixel data comprises:
segmenting each object in the first image frame via a segmentation algorithm to obtain a mask array; and
obtaining, based on the mask array and channel data of the first image frame, the first high-dimensional segmented pixel data.

Preferably, the step of performing, based on a first preset pose, differentiable rendering on the three-dimensional model of the multiple objects to obtain first high-dimensional data comprises:
transforming, based on a preset pose of the multiple objects, the three-dimensional model of the multiple objects from an object coordinate system into a camera coordinate system according to a learnable pose conversion parameter configured to characterize real-time poses of the objects; and
performing, based on a preset camera parameter, differentiable rendering on the transformed three-dimensional model to obtain the first high-dimensional data.

Preferably, after the step of performing differentiable rendering on the three-dimensional model of the multiple objects to obtain first high-dimensional data, the method further comprises:
calculating occlusion-aware data by using depth information and silhouette information of the first high-dimensional data, the occlusion-aware data comprises corresponding to occlusion information of the object;
the step of updating, based on minimizing an error between the first high-dimensional segmented pixel data and the first high-dimensional data, the first preset pose to obtain the first object pose comprises:
performing iteration via a gradient descent method to minimize a pixel difference value between the first high-dimensional segmented pixel data and the occlusion-aware data, so as to update the learnable pose conversion parameter.

Preferably, the step of performing differentiable rendering on the transformed three-dimensional model to obtain the first high-dimensional data comprises:
performing differentiable rendering on the transformed three-dimensional model to obtain first high-dimensional data having a variable silhouette, a range of the variable silhouette being determined based on a degree of difference between the first pixel data and the preset pose.

Preferably, the step of performing the differentiable rendering on the transformed three-dimensional model to obtain the first high-dimensional data comprises:
performing, based on a first RGBXY derivative, the differentiable rendering on the transformed three-dimensional model, and mapping and matching pixels between the first high-dimensional data and the first high-dimensional segmented pixel data through optimal transport to obtain a second RGBXY derivative of the first high-dimensional segmented pixel data, both the first RGBXY derivative and the second RGBXY derivative comprising information of color changes and spatial position changes.

Preferably, the step of updating, based on minimizing an error between the first high-dimensional segmented pixel data and the first high-dimensional data, the first preset pose to obtain the first object pose comprises:
minimizing, based on optimal transport, a pixel-level difference value between the second RGBXY derivative of the first high-dimensional segmented pixel data and the first RGBXY derivative of the first high-dimensional data; and updating, based on minimizing the pixel-level difference value between the second RGBXY derivative of the first high-dimensional segmented pixel data and the first RGBXY derivative of the first high-dimensional data, the first preset pose to obtain the first object pose.

Preferably, the object comprises a robot; the pose conversion parameter comprises a joint angle of the robot;
the step of transforming, based on a preset pose of the multiple objects, the three-dimensional model of the multiple objects from an object coordinate system into a camera coordinate system according to a learnable pose conversion parameter comprises:
transforming, based on a preset pose and a preset joint angle of the robot, three-dimensional models of various components of the robot from respective object coordinate systems of the various components into the camera coordinate system by calculating a robot forward kinematics matrix;
the step of performing, based on a preset camera parameter, differentiable rendering on the transformed three-dimensional model to obtain the first high-dimensional data comprises:
performing, based on a preset camera parameter, differentiable rendering on the transformed three-dimensional model of the robot to obtain the first high-dimensional data.

Preferably, the preset pose comprises a preset translation parameter and a preset rotation parameter of the multiple objects;
before the step of transforming the three-dimensional model of the multiple objects from the object coordinate system into the camera coordinate system according to the learnable pose conversion parameter, the method further comprises:
determining the preset translation parameter by using point cloud data of each object; and
calculating a similarity between a template in a template set and a reference image by using a preset image metric and/or feature and/or pre-trained model to determine a best-matching object template, and determining the preset rotation parameter according to a rotation parameter corresponding to the object template;
the template set contains rotation parameters and corresponding images, and the template set is generated by performing a plurality of uniform samplings on a selected rotation axis.

Preferably, before the step of calculating the similarity between the template in the template set and the reference image to determine the best-matching object template, the method further comprises:
performing uniform sampling a plurality of times on a selected rotation axis to generate sampling data of a preset sampling quantity; and
rendering, based on a preset camera parameter, a three-dimensional model of an object, an initial translation parameter, and the sampling data of the preset sampling quantity, to generate a set of images of the three-dimensional model at different poses, so as to form said template set.

Preferably, before the step of performing differentiable rendering on the three-dimensional model of the multiple objects to obtain first high-dimensional data, the method further comprises:
obtaining a plurality of replica models of the three-dimensional model of a batch-optimized object, the plurality of replica models having different preset rotation parameters and having different translation parameters and/or rotation parameters;
calculating, by using high-dimensional data that is obtained via rendering from the replica models of the batch-optimized object, to obtain occlusion-aware data corresponding to occlusion information comprising the batch-optimized object; and
calculating a loss value between the high-dimensional segmented pixel data and the occlusion-aware data of the batch-optimized object to determine an object replica model having a minimum loss value, the object replica model being configured to determine a preset pose for a current round of pose estimation.

Preferably, the step of obtaining real-time video data comprises:
performing surrounding shooting from different angles using a plurality of cameras, so as to reduce pose ambiguity caused by mutual occlusion and self-occlusion of the objects; and
matching real-time object detection data of each camera with each other using three-dimensional point cloud reprojection to obtain the real-time video data.

Preferably, the step of matching real-time object detection data of each camera with each other using three-dimensional point cloud reprojection comprises:
obtaining a first image of a first camera and a second image of a second camera, the first image comprising one or more objects, and the second image comprising one or more objects;
determining camera parameters comprising intrinsic parameters of the first camera and the second camera, and extrinsic parameters defining a transformation between a field of view of the first camera and a field of view of the second camera;
reprojecting, based on the determined camera parameters, a depth image or three-dimensional point cloud data of the first camera into the field of view of the second camera to obtain a corresponding reprojected two-dimensional point group;
comparing mask information of the one or more objects in the image of the second camera with the reprojected two-dimensional point group to determine which object's mask information has a maximum degree of overlap with the reprojected two-dimensional point group; and
determining, based on the maximum degree of overlap, that identity information of an object in the image of the first camera and identity information of an object in the image of the second camera match each other.

The present disclosure further provides a method for controlling a robot, the method comprising:
performing a method for estimating poses of multiple objects as described above to obtain pose information of a robot and pose information of a target object;
inputting the pose information of the robot and the pose information of the target object into a control system of the robot; and
controlling, by the control system, an interaction between the robot and the target object according to the input.

Those skilled in the art can understand that, upon obtaining the pose information of the robot and the pose information of the target object, the control system of the robot can control the robot according to the inputted pose information to achieve precise movement. For example, during grasping of a target object, the inputted pose information can enable the control system to calculate an optimal path and movement strategy, thereby minimizing a risk of collision or slippage.

The present disclosure further provides a computer program product, comprising a computer program, wherein when the computer program is executed by a processor, the method for estimating poses of multiple objects as described above or the method for controlling a robot as described above is implemented.

The present disclosure further provides a system for estimating poses of multiple objects, the system comprising:
one or more processors configured to perform a method for estimating poses of multiple objects as described above or a method for controlling the robot as described above.

Preferably, the system further comprises one or more cameras configured to obtain video data and/or image data of an object to be estimated.

Preferably, the system further comprises a robot;
the system is configured to perform a method for estimating poses of multiple objects as described above to obtain pose information of the robot and pose information of a target object; and
the system is configured to control an interaction between the robot and the target object according to the pose information of the robot and the pose information of the target object.

The present disclosure further provides an electronic device comprising a memory, a processor, and a computer program stored in the memory and executable by the processor, wherein the processor, when executing the computer program, performs a method for estimating poses of multiple objects as described above or a method for controlling a robot as described above.

The present disclosure further provides a computer-readable medium having a computer instruction stored thereon, wherein the computer instruction, when executed by a processor, performs a method for estimating poses of multiple objects as described above or a method for controlling a robot as described above.

The present disclosure further provides a computer program, wherein the computer program, when executed by a processor, performs a method for estimating poses of multiple objects as described above or a method for controlling a robot as described above.

The positive and progressive effects of the present disclosure lie in that:

In the method for estimating poses of multiple objects provided by the present disclosure, by using a real-time video stream as an input, each latest image frame of the real-time video stream is sequentially processed to enable real-time dynamic tracking; and by performing image segmentation on each image frame to recognize each object therein, a high-dimensional segmented pixel array comprising pixel data of each object is obtained, and is compared with a high-dimensional array obtained by performing differentiable rendering on known three-dimensional models of the multiple objects, wherein a pose is estimated by minimizing an error, thereby achieving multi-object pose estimation.

### BRIEF DESCRIPTION OF THE DRAWINGS

To describe the technical solutions in the embodiments of the present specification more clearly, the drawings required to be used in the description of the embodiments will be briefly introduced below. Obviously, the drawings in the description below are merely some examples or embodiments of the present specification. For those of ordinary skill in the art, the present specification may also be applied to other similar scenarios according to these drawings without inventive effort.
FIG. 1 is a first flowchart of a method for estimating poses of multiple objects provided by example 1 of the present disclosure.
FIG. 2 is a second flowchart of a method for estimating poses of multiple objects provided by example 1 of the present disclosure.
FIG. 3 is a schematic diagram of static pose calibration for object pose estimation provided by example 1 of the present disclosure.
FIG. 4 is a schematic diagram of real-time pose tracking for object pose estimation provided by example 1 of the present disclosure.
FIG. 5 is a schematic diagram of static pose calibration for robot and object pose estimation provided by example 1 of the present disclosure.
FIG. 6 a schematic diagram of static pose calibration for robot and object pose estimation provided by example 1 of the present disclosure.
FIG. 7 is a schematic flowchart of retrieving coarse initial rotation parameters provided by example 1 of the present disclosure,
FIG. 8 is a visualization result of different initial poses with or without initial translation parameters and initial rotation parameters at the beginning of pose estimation provided by example 1 of the present disclosure.
FIG. 9 is a schematic diagram of a large-angle rotation problem during an optimization process provided by example 1 of the present disclosure.
FIG. 10 is a visualization effect of an example of a teapot mesh replica used in a batch optimization strategy provided by example 1 of the present disclosure.
FIG. 11a-c are schematic diagrams of setups of a plurality of cameras and detection results of different viewing angles provided by example 1 of the present disclosure.
FIG. 12a-c are schematic diagrams of reprojecting a three-dimensional point cloud from camera view 1 to view 2 provided by example 1 of the present disclosure.
FIG. 13 is a schematic effect diagram of an interaction between a robot and an object during a grasping operation provided by example 1 of the present disclosure.
FIG. 14 is a structural schematic diagram of an electronic device provided by example 4 of the present disclosure.

### DETAILED DESCRIPTION

The present disclosure is further described below by way of examples, but the present disclosure is not thereby limited to the scope of said examples.

Reference to "an example" herein means that a particular feature, structure, or characteristic described in connection with the example can be included in at least one embodiment of the present application. The appearance of this phrase in various places in the text is not necessarily all referring to the same embodiment, nor is it an independent or alternative embodiment mutually exclusive with other embodiments. It is explicitly and implicitly understood by those skilled in the art that the embodiments described herein can be combined with other embodiments.

It should be understood that "apparatus," "system," "unit," and/or "module" used herein represent a way to distinguish different components, elements, parts, portions, or assemblies of different levels. However, if other words can achieve the same purpose, said words may be replaced by other expressions.

As shown herein, unless the context clearly indicates an exception, words such as "a," "an," "one," and/or "the" do not specifically refer to the singular, but may also include the plural. Generally speaking, the terms "include" and "comprise" only indicate the inclusion of steps and elements that have been clearly identified, and these steps and elements do not constitute an exclusive list; a method or an apparatus may also include other steps or elements.

Regarding the definition of inclusion herein, terms such as "have," "may have," "comprise," or "may comprise" as used herein indicate the existence of corresponding functions, operations, elements, etc. in the text, and do not limit the existence of one or more other functions, operations, elements, etc. In addition, it should be understood that terms such as "comprising" or "having" as used herein indicate the existence of features, figures, steps, operations, elements, components, or combinations thereof described in the specification, without excluding the existence or addition of one or more other features, figures, steps, operations, elements, components, or combinations thereof.

Flowcharts are used herein to illustrate operations executed by the system according to the embodiments herein. It should be understood that preceding or succeeding operations are not necessarily executed precisely according to the order. Conversely, various steps can be processed in reverse order or simultaneously. Meanwhile, other operations may also be added to these processes, or a certain step or several steps of operations may be removed from these processes.

### Example 1

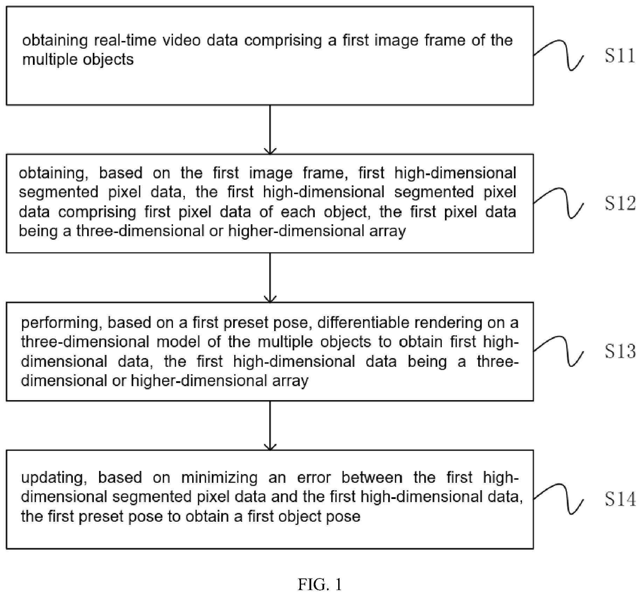

Refer to FIG. 1, which is a first schematic flowchart of the method for estimating poses of multiple objects in this example. Specifically, as shown in FIG. 1, the method comprises:
S11: obtaining real-time video data comprising a first image frame of the multiple objects; with a real-time video stream as an input, the real-time video stream can be segmented into a plurality of real-time image frames;
S12: obtaining, based on the first image frame, first high-dimensional segmented pixel data, the first high-dimensional segmented pixel data comprising first pixel data of each object, the first pixel data being a three-dimensional or higher-dimensional array, wherein each image frame can be subjected to image segmentation to recognize each object therein, so as to obtain a high-dimensional segmented pixel array comprising the pixel data of each object;
S13: performing, based on a first preset pose, differentiable rendering on a three-dimensional model of the multiple objects to obtain first high-dimensional data, the first high-dimensional data being a three-dimensional or higher-dimensional array; and
S14: updating, based on minimizing an error between the first high-dimensional segmented pixel data and the first high-dimensional data, the first preset pose to obtain a first object pose.

After processing the first image frame, by sequentially performing image processing on each image frame of the real-time video stream, the poses of the multiple objects can be estimated in a dynamic and real-time manner. Therefore, the real-time video data further comprises at least a second image frame of the multiple objects.

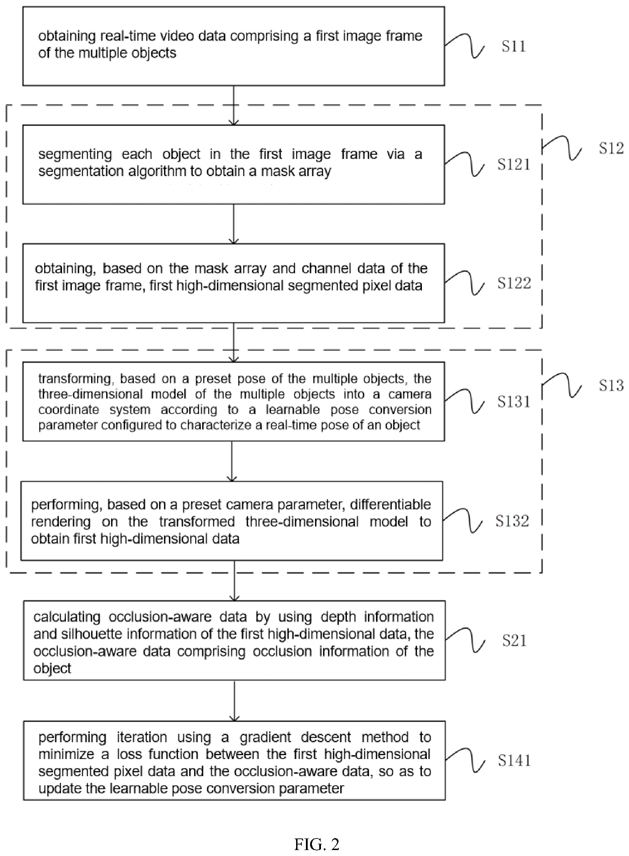

Refer to FIG. 2, which is a second schematic flowchart of the method for estimating poses of multiple objects in this example. Specifically, as shown in FIG. 2, after step S14, the method further comprises:
S15: obtaining second high-dimensional segmented pixel data based on the second image frame;
S16: performing, based on a first object pose, differentiable rendering on the three-dimensional model of the multiple objects to obtain second high-dimensional data, the second high-dimensional data being a three-dimensional or higher-dimensional array;
S17: updating, based on minimizing an error between the second high-dimensional segmented pixel data and the second high-dimensional data, the first object pose to obtain a second object pose; and
S18: sequentially updating, based on other image frames of the real-time video data, a pose corresponding to a previous image frame to obtain other object poses.

In some examples, the method steps described below can be implemented through programs or customized circuits, or a combination of customized circuits and programs; for example, the following steps can be executed through one or more GPUs, one or more CPUs, or a combination of any other technically feasible one or more processors, such as an ASIC chip. In some examples, the one or more processors, such as an ASIC chip, may comprise a memory. Further, those skilled in the art can understand that the scope of protection of the present disclosure can comprise any system and apparatus capable of executing the following method steps.

In an optional embodiment, step S12 comprises:
S121: segmenting each object in the first image frame via a segmentation algorithm to obtain a mask array; and
S122: obtaining, based on the mask array and channel data of the first image frame, the first high-dimensional segmented pixel data.

### Image Segmentation

The inventors have found that an image segmentation algorithm involves dividing an image (RGB or RGB-depth) into a plurality of segments (pixel sets), so as to simplify a representation of the image into content that is more meaningful and easier to analyze. Generally, the image segmentation algorithm assigns a label to each pixel in the image, and pixels having the same label share certain characteristics (color, edge, texture, category, object instance, etc.). According to different classification criteria, image segmentation algorithms can be divided into categories such as semantic segmentation, instance segmentation, and panoptic segmentation. Here, in some embodiments of the present disclosure, for example, an instance image segmentation algorithm can be used, wherein each segment of the image uniquely represents a specific instance of an object. This method not only classifies pixels of the image into different object classes, but also can distinguish different instances of the same class. For example, in a street scene, instance segmentation will recognize and separate each individual car, pedestrian, or any other important object, treating each object as a unique entity, although they may belong to the same class.

In another optional embodiment, step S13 comprises:
S131: transforming, based on a preset pose of the multiple objects, the three-dimensional model of the multiple objects from an object coordinate system into a camera coordinate system according to a learnable pose conversion parameter configured to characterize a real-time pose of an object, wherein object pose estimation is a process of determining a position and orientation (6D pose) of an object in space, which can be implemented through processing of image data; and
S132: performing, based on a preset camera parameter, differentiable rendering on the transformed three-dimensional model to obtain the first high-dimensional data. Different from traditional non-differentiable rendering, differentiable rendering can calculate gradients of a 3D object and propagate them through an image, and bridges a gap between 2D image processing and 3D image processing, so as to optimize 3D scene parameters (camera pose, pose or shape of a 3D model, lighting conditions, etc.) by back-propagating gradients according to a rendering output.

Specifically, when taking an image frame as an input image, it can be denoted as $I ∈ {ℝ}^{H \times W \times 3 \left(4\right)}$. The input image can be an RGB image or an RGBD image containing *N* objects. Segmenting the input image using a segmentation algorithm can output a mask array ${I}_{mask} ∈ {ℝ}^{H \times W \times N}$*,* which is then combined with channel data of the image frame to obtain a high-dimensional array $A = I ⊙ {I}_{mask} ∈ {ℝ}^{H \times W \times C \times N}$, i.e., high-dimensional segmented pixel data, wherein *C* represents the channel data (such as silhouette, RGB, and depth channels) of each image frame. ⊙ denotes element-wise multiplication. Applying the mask to the input image I involves an array multiplication broadcasting mechanism, that is: first repeating $I ∈ {ℝ}^{H \times W \times 3 \left(4\right)}$ for N times to obtain ${ℝ}^{H \times W \times 3 \left(4\right) \times N}$*,* which is then subjected to a ⊙ operation with *Iₘₐₛₖ,* so that the obtained shape of *A* is ${ℝ}^{H \times W \times 3 \left(4\right) \times N}$*.* The dimension corresponding to 3(4) is then superimposed with *Iₘₐₛₖ* to obtain the dimension corresponding to *C*.

The task of 6D object pose estimation is to estimate a rigid transformation for all objects. The rigid transformation can be represented as $P = \left\{\left.{P}_{n}\right|n∈\left\{1,2,…N\right\}\right\} ∈ {ℝ}^{4 \times 4 \times N}$, and the rigid transformation is used to map a model *M =* {*Mₙ* | n ∈ {1,2, ... *N} }* of a 3D object from the object coordinate system to the camera coordinate system. It is assumed that the three-dimensional object model M and the camera intrinsic parameter *K* are known. Each model *Mₙ* can be defined as a set of vertices in ${ℝ}^{3}$ and a set of polygons describing the surface of the object. The object pose **P***ₙ* is represented by a 4×4 rigid transformation matrix **P***ₙ*=[**R**,**T**;0,1], wherein **R** is a 3×3 rotation matrix, and **T** is a 3×1 translation vector. The translation **T** specifies the origin of the object coordinate system in the camera coordinate system. To ensure that **R** is physically valid, the rotation matrix **R** is represented by a quaternion **q,** which can be further converted into the 3×3 rotation matrix.

Then, the pose estimation process is as follows: for a given initial pose **P'** and object model *M*, the object model can be transformed to obtain ${M}_{P ′} = \left\{{P}_{n}^{′}⋅{M}_{n}\left|n∈\left\{1,2,…N\right\}\right.\right\}$*,* wherein ${P}_{n}^{′}$ is the initial pose of the n-th object, and *Mₙ* is the three-dimensional model of the *n*-th object. Using a differentiable renderer 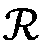 and the camera intrinsic parameters K, rendering can be performed to obtain the first high-dimensional data $\hat{A} ← R \left({M}_{P ′}, K\right) ∈ {ℝ}^{H ′ \times W ′ \times C \times N}$ *,* wherein *H'* and *W'* represent the height and width of the rendered image, respectively, and *C* represents the number of channels (such as alpha, RGB, and depth). The rendered model *Â* should match the structure of a reference array *A,* and the reference array *A* is the high-dimensional array generated by the segmentation algorithm and encoding class identity information as described above.

In an optional embodiment, step S132 specifically comprises:
performing differentiable rendering on the transformed three-dimensional model to obtain first high-dimensional data having a variable silhouette, a range of the variable silhouette being determined based on a degree of difference between the first pixel data and the preset pose.

In another optional embodiment, step S132 specifically comprises:
performing, based on a first RGBXY derivative, the differentiable rendering on the transformed three-dimensional model, and mapping and matching pixels between the first high-dimensional data and the first high-dimensional segmented pixel data through optimal transport to obtain a second RGBXY derivative of the first high-dimensional segmented pixel data, both the first RGBXY derivative and the second RGBXY derivative comprising information of color changes and spatial position changes.

Further, step S14 may comprise:
minimizing, based on optimal transport, a pixel-level difference value between the second RGBXY derivative of the first high-dimensional segmented pixel data and the first RGBXY derivative of the first high-dimensional data; and updating, based on minimizing the pixel-level difference value between the second RGBXY derivative of the first high-dimensional segmented pixel data and the first RGBXY derivative of the first high-dimensional data, the first preset pose to obtain the first object pose.

### Differentiable Rendering

The inventors have found that, in some embodiments of the present disclosure, a differentiable rendering method may be employed to calculate gradients of a three-dimensional object, and the gradients can be propagated between images. The differentiable rendering method can connect a two-dimensional image processing method and a three-dimensional image processing method. By back-propagating gradients of a rendered output, optimization of three-dimensional scene data (such as camera pose, three-dimensional model pose or shape, lighting conditions, etc.) can be achieved.

The literature Liu, S., Li, T., Chen, W., & Li, H. Soft rasterizer: A differentiable renderer for image-based 3d reasoning. In Proceedings of the IEEE/CVF International Conference on Computer Vision (ICCV) (pp. 7708-7717). (2019) describes performing loss calculation by rendering a single image of geometric primitives, the entire content disclosed therein being incorporated into the present disclosure by reference. In some embodiments of the present disclosure, a rendered smooth edge silhouette tensor has a variable smooth edge range, and the smooth edge range can be adjusted to become larger or smaller according to a difference between a pose of a real object and a pose of a virtual digital twin object. When a large difference exists between the pose of the real object and the pose of the virtual digital twin object, a large smoothing range can be utilized to allow gradient flow when the digital twin object is far away from the real target object. When the difference between the two is small, a narrowed smooth edge can be used to perform higher-precision pose estimation.

### Occlusion In Rendered Array

The inventors have found that because a reference high-dimensional array *A* only captures visual information after occlusion, whereas a high-dimensional rendered model *Â* contains the complete visual information of each object without considering occlusion between objects, a direct comparison will cause pose estimation errors. Therefore, it is necessary to take into account the occlusion problem in the high-dimensional rendered model *Â*. After step S13, the method further comprises:
S21: calculating occlusion-aware data by using depth information and silhouette information of the first high-dimensional data, the occlusion-aware data comprises occlusion information of the object; wherein the high-dimensional rendered model *Â* can implement calculation of the occlusion information by using a z-buffer (depth buffer) to determine visibility of an object on each pixel, and a set of binary object masks $Mask ∈ {ℝ}^{H ′ \times W ′ \times N}$ and corresponding depth maps $D ∈ {ℝ}^{H ′ \times W ′ \times N}$ can be used during a processing process, wherein n ∈ *N* is an index of an object in an array. Specifically, in order to treat non-object regions as far away, a pixel of a large constant *δ* is added to pixels of the depth map to perform depth adjustment: $D ′ \left(x, y, n\right) = D \left(x, y, n\right) + \left(1-Mask\left(x, y, n\right)\right) \times δ$

For each pixel (*x, y*), a foremost object is determined by finding an object having a minimum depth among all target objects, so as to perform visibility measurement: $γ \left(x, y\right) = arg {min}_{n} D ′ \left(x, y, n\right)$

An occlusion mask calculation formula for each pixel of each object is: $F \left(x, y, n\right) = 1 \left[γ\left(x, y\right)=n\right]$
wherein 1 is an indicator function, which returns 1 if a condition is true, and returns 0 otherwise.

Multiplying the occlusion mask by the initial object mask can yield a final occluded mask for each object: $O \left(x, y, n\right) = {F}_{n} \left(x, y\right) \times Mask \left(x, y, n\right)$

Using the mask *O(x, y, n),* we can calculate an array *Â_{occ}* considering *Â.* ${\hat{A}}_{occ} \left(x, y, n\right) = O \left(x, y, n\right) \times \hat{A} \left(x, y, n\right)$

### RGBXY Derivatives

The inventors have found that RGBXY derivatives are a specific type of gradient used in differentiable rendering, simultaneously considering color (RGB) and spatial (XY) changes in an image. Different from traditional per-pixel derivatives calculated solely based on color differences, RGBXY derivatives further contain spatial changes, thereby improving robustness of gradient-based optimization. Even when significant differences exist between an initial pose and an object pose, these derivatives can more accurately track object transformations (such as position and rotation).

Step S14 comprises:
S141: performing iteration using a gradient descent method to minimize a pixel difference value between the first high-dimensional segmented pixel data and the occlusion-aware data, so as to update the learnable pose conversion parameter.

By setting the pose conversion parameter **P** as a learnable parameter, an object pose is estimated by minimizing an error between a real high-dimensional array and an occlusion-aware rendered array. An optimization target is: $P = argmin Loss \left({\hat{A}}_{occ}, A\right)$
wherein *Loss* is a metric used to evaluate a difference between each object in a captured image *I* and a corresponding digital twin in a rendered image. A loss function is defined as a weighted combination of an error of each modality (such as Mean Squared Error (MSE), Mean Absolute Error, Intersection over Union (IoU), DICE coefficient, etc.) and an optimal transport error of RGBXY points of an occlusion-aware image: ${L}_{c} = {\sum }_{n = 1}^{N} {\sum }_{x = 1}^{W} {\sum }_{y = 1}^{H} {\left({A}_{c}\left(x, y, n\right)-{\hat{A}}_{c}^{occ}\left(x, y, n\right)\right)}^{2}$ ${L}_{d} = {\sum }_{n = 1}^{N} {\sum }_{x = 1}^{W} {\sum }_{y = 1}^{H} {\left({A}_{d}\left(x, y, n\right)-{\hat{A}}_{d}^{occ}\left(x, y, n\right)\right)}^{2}$ ${L}_{mask} = {\sum }_{n = 1}^{N} {\sum }_{x = 1}^{W} {\sum }_{y = 1}^{H} {\left({A}_{mask}\left(x, y, n\right)-{\hat{A}}_{mask}^{occ}\left(x, y, n\right)\right)}^{2}$ ${L}_{ot} = {\sum }_{n = 1}^{N} {\sum }_{i} {\left‖{Q}_{i}\left(n\right)-{\hat{Q}}_{σ \left(i\right)}^{occ}\left(n\right)\right‖}^{2} for a matching σ$ $Loss = {λ}_{c} {L}_{c} + {λ}_{d} {L}_{d} + {λ}_{mask} {L}_{mask} + {λ}_{ot} {L}_{ot}$
wherein *A_{*}(y, x, n*) represents a pixel value of * in modality of *A,* which can be RGB color, depth, and a silhouette mask; *Qᵢ(n)* represents a point *i* in a set of RGBXY points (comprising only points whose RGB color values are non-zero, where XY represents spatial coordinates) in a captured reference image from an object n; ${\hat{Q}}_{σ \left(i\right)}^{occ} \left(n\right)$ represents a point σ(*i*) in a set of RGBXY points in an occlusion-adjusted rendered image of the object n; a matching function σ(·) defines a one-to-one correspondence relationship between points in the captured reference image and points in the occlusion-adjusted rendered image, minimizing a total distance between matched images; and *λ_{c}, λ_{g}* and *λ*ₘₐₛₖ *and λₒₜ* represent weights for balancing losses. The above-mentioned loss function is completely differentiable, and the pose conversion parameter **P** can be optimized using the gradient descent method.

### Optimal Transport

The inventors have found that by adopting a mathematical framework such as optimal transport, a most effective method for transforming one probability distribution into another probability distribution can be found by minimizing a cost function. In the fields of computer vision and rendering, optimal transport is used to match pixels or features between two images (such as a rendered image and a reference image) to ensure that corresponding features are correctly aligned, even under a situation where significant differences exist in object localization.

The literature Xing, J., Luan, F., Yan, L. Q., Hu, X., Qian, H., & Xu, K. Differentiable rendering using RGBXY derivatives and optimal transport. ACM Transactions on Graphics (TOG), 41(6), 1-13. (2022) describes an innovative method for performing differentiable rendering using RGBXY derivatives and optimal transport, which solves significant limitations of traditional pixel derivative methods, the entire content disclosed therein being incorporated into the present disclosure by reference. It utilizes 5DRGBXY derivatives to capture changes in color and spatial position, improving robustness of optimization tasks, particularly for long-range object transformations. The inventors have found that some embodiments of the present disclosure can be based on this technology to integrate RGBXY derivatives and optimal transport into the real-time differentiable rendering system of the present embodiment. By doing so, significant advantages are obtained in handling dynamic environments with continuous video inputs, because it improves accuracy of object pose estimation. The RGBXY derivatives take into account color and spatial changes, providing a more robust gradient-based optimization for large object transformations. Optimal transport minimizes a cost function that quantifies differences between RGBXY features of a rendered image and a target image, ensuring efficient alignment. By minimizing this function, optimal transport finds the most effective method for matching features even under a situation where significant differences exist in object localization. The combination of RGBXY optimal transport improves silhouette matching across frames, making it more robust in dynamic multi-object environments.

The inventors have found that the above-mentioned object pose estimation process can be implemented by using differentiable rendering libraries such as SoftRas, PyTorch3D, and nvdiffrast. The literature Liu, S., Li, T., Chen, W., & Li, H. Soft rasterizer: A differentiable renderer for image-based 3d reasoning. In Proceedings of the IEEE/CVF International Conference on Computer Vision (ICCV) (pp. 7708-7717). (2019) describes using the SoftRas differentiable rendering library to implement pose estimation, the entire content disclosed therein being incorporated into the present disclosure by reference. The reference literature Ravi, N., Reizenstein, J., Novotny, D., Gordon, T., Lo, W. Y., Johnson, J., & Gkioxari, G. Accelerating 3d deep learning with pytorch3d. arXiv:2007.08501 (2020) describes using the PyTorch3D differentiable rendering library to implement pose estimation, the entire content disclosed therein being incorporated into the present disclosure by reference. The reference literature Laine, S., Hellsten, J., Karras, T., Seol, Y., Lehtinen, J., & Aila, T. Modular primitives for high-performance differentiable rendering. ACM Transactions on Graphics (TOG), 39(6), 1-14. (2020), and J. Tremblay, B. Wen, V. Blukis, B. Sundaralingam, S. Tyree, and S. Birchfield. Diff-DOPE: Differentiable Deep Object Pose Estimation. arXiv:2310.00463 (2023) describe using the nvdiffrast differentiable rendering library to implement pose estimation, the entire contents disclosed therein being incorporated into the present disclosure by reference.

Compared to the above-mentioned rendering technologies that focus on estimating 6D object poses from 2D static reference images, some embodiments of the present disclosure can solve the problem of real-time dynamic tracking of 6D object poses of a plurality of objects. Therefore, the method of some embodiments of the present disclosure can have two processing stages: 1) static pose calibration of an initial digital twin model; and 2) dynamic pose tracking of the digital twin model. The second stage is implemented by continuously optimizing the above-mentioned loss function by continuously updating the image *I* using a physical camera, so that the digital twin of the rendered image follows the target of the captured image to move in 3D space.

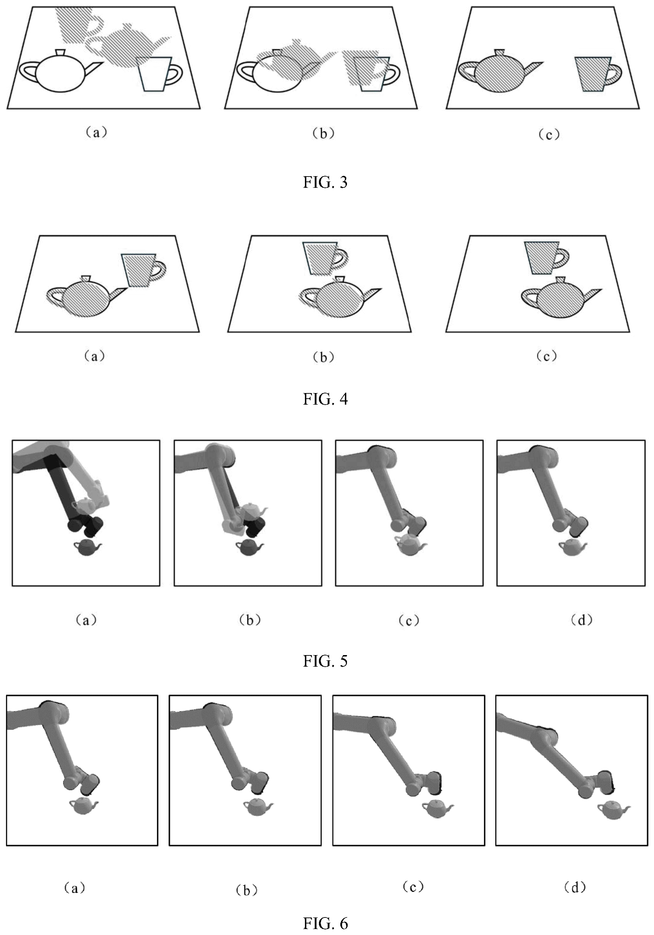

An example is given below by using a 3D-printed teapot and teacup, a depth camera, and a differentiable rendering library. The method of the present embodiment achieves real-time tracking of the teapot and the teacup at a speed of approximately 60 FPS. FIG. 3 and FIG. 4 show an optimization process of the 6D pose of the digital twin in the first stage and the second stage. FIG. 3 is a static pose calibration process of the digital twin. The leftmost figure schematically illustrates initial poses of a real teapot, a real teacup, and a digital twin thereof (slashed area). A model of the digital twin is rendered from known three-dimensional models, camera parameters, and a currently estimated pose. From left to right, the method of the present embodiment can calibrate the pose of the digital twin to make it coincide with a real target. FIG. 4 is a real-time pose tracking process of the digital twin. From left to right, by simultaneously changing physical poses of the real teapot and the real teacup, the method of the present embodiment can continuously track the poses of the targets, thereby achieving real-time digital twin reconstruction.

The objects of the present embodiment may further comprise a robot; the pose conversion parameter comprises a joint angle of the robot; step S131 may specifically comprise:
transforming, based on a preset pose and a preset joint angle of the robot, three-dimensional models of various components of the robot from respective object coordinate systems of the various components into the camera coordinate system by calculating a robot forward kinematics matrix;
step S132 may specifically comprise:
   performing, based on the preset camera parameter, differentiable rendering on the transformed three-dimensional model of the robot to obtain the first high-dimensional data.

Given an input image *I* (RGB or RGBD), an objective of robot pose estimation is to recover a state of a robot with known joints in a 3D scene. The state of an articulated jointed robot is defined by two key parts: a 6D pose **P**_{base} of a robot base, i.e., a 3D translation and a 3D rotation relative to an origin of a camera coordinate system; and joint angle θ values of robot joints. For an articulated jointed robot having a known structure, its structure is typically represented by links and joint angles, wherein the joint angles determine a pose of each robot link relative to an origin coordinate of the robot base. By using the 6D pose **P***_{base}* of the base and the joint angle θ, a mesh of each robot link can be transformed from an initial pose to an appropriate pose to represent the robot in various configurations.

This example adopts an optimization method similar to the object pose estimation, but takes the joint angles θ into account. Given an initial 6D pose ${P}_{base}^{′}$ of the robot base, initial joint angles *θ*', and a robot model *M_{robot} =* {*lₙ* | *n* ∈ {1,2, *... N*}} having N links, a forward kinematics matrix ${P}_{fk} \left(θ′\right) = \left\{{P}_{fk}^{n}\left(θ′\right)\left|n∈\left\{1,2,…N\right\}\right.\right\}$ of the initial joint angles *θ*' of each link is calculated first. Then, a transformed robot model ${M}_{robot}^{\left({P}_{b}^{′},θ′\right)} = \left\{\left.{P}_{base}^{′}⋅{P}_{fk}^{n}\left(θ′\right)⋅{l}_{n}\right|n∈\left\{1,2,…N\right\}\right\}$ can be obtained, that is, a robot mesh configured with ${P}_{base}^{′}$ and preset joint angles *θ'* and ready to be rendered at any time. Depending on a type of a robot segmentation algorithm used, a robot mask can be obtained, which can be a single-channel mask ${I}_{mask} ∈ {ℝ}^{H \times W}$ combining all linkages, or a multi-channel mask ${I}_{mask} ∈ {ℝ}^{H \times W \times N}$*Iₘₐₛₖ* where each channel represents an individual linkage. This choice generates different reference arrays *A = I ⊙ Iₘₐₛₖ .* Depending on a shape of *A,* a high-dimensional model $\hat{A} ← R \left({M}_{robot}^{\left({P}_{base}^{′},θ′\right)}, K\right) ∈ {ℝ}^{H ′ \times W ′ \times C \left(\times N\right)}$ is rendered using a differentiable renderer 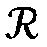 and camera intrinsic parameters *K*, wherein *H', W',* and *C* represent a number of channels (such as RGB, depth), a height, and a width of a rendered image, respectively.

### Forward Kinematics

Forward kinematics is a series of physical transformations that describe physical transformations available for each component in a robot. A physical pose of a robot component is determined not only by a joint angle or translation stage (a relative pose with an adjacent component) of its immediately adjacent component, but also by a relative pose of said adjacent component with respect to its own adjacent component. Therefore, it is more intuitive to describe the physical transformation of the robot component as a composite transformation of sequential transformations. In computer graphics, such a composite transformation can be simply described as a multiplication of a 4x4 matrix and a coordinate mesh of geometric point clouds of a component. Usually, a unique 4x4 matrix is provided for each independent component of the robot to describe complete forward kinematics.

Then, corresponding occlusion-aware data *Â_{occ}* can be calculated using the above-mentioned method for estimating poses. Furthermore, a forward kinematics process of the robot is differentiable. Therefore, we can set the parameter **P***_{base}* and the joint angle θ, or one of them, as learnable parameters. By minimizing an error between a real array and the occlusion-aware data, a correct robot 6D pose and/or joint angle can be estimated: ${P}_{base} , θ = argmin Loss \left({\hat{A}}_{occ}, A\right)$
wherein *Loss* is the same metric as used in the object pose estimation section.

Similar to the multi-object pose estimation described above, the robot pose estimation can simultaneously optimize a plurality of targets or robot arms (or both simultaneously), and also consists of two stages: static pose calibration and real-time pose tracking. Therefore, given an input image comprising a robot arm with a known 3D model and a target object, the robot and object pose estimation method of the present embodiment can first calibrate its corresponding digital twin to a correct pose, and continuously track their poses in real time when the robot arm and the target object move. An illustrative example is provided below by using a differentiable rendering library having a Universal Robots UR5 model and a teapot. First, a series of images are rendered as poses of a target robot and a target object. Then, a robot digital twin model is constructed according to a URDF file of the UR5 robot arm, and optimization of its pose is attempted using differentiable rendering to match pre-rendered images of the robot as well as the teapot.

### Unified Robotics Description Format (URDF)

The Unified Robotics Description Format (URDF) is an example of a data format that can be used to describe physical geometries (in a form of point cloud meshes) of a robot and components thereof, as well as degrees of freedom available on the robot to implement physical structural transformations (such as joint angle rotations and physical translations). Mesh components in a URDF file may comprise visual meshes (a large quantity of triangle mesh polygons used for visualization) and collision meshes (a small quantity of triangle mesh polygons used for efficient collision detection).

FIG. 5 and FIG. 6 show a calibration and tracking process of poses of the digital twins of the robot and the teapot. FIG. 5 is a static pose calibration process of the digital twins of the robot and the teapot. The leftmost figure shows initial poses of the robot and the teapot (colored) and digital twins thereof ((white ghost). A model of the digital twin is rendered from known three-dimensional models, camera parameters, and a currently estimated pose. From left to right, the method of the present embodiment can calibrate the pose of the digital twin to make it coincide with a real target. FIG. 6 is a real-time pose tracking process of the digital twin. From left to right, by simultaneously changing physical poses of the robot and the teacup, the method of the present embodiment can continuously track the poses of the targets, thereby achieving real-time digital twin reconstruction.

The pose estimation method of this example estimates poses of a plurality of objects and robots in an iterative manner. An iterative nature of such an algorithm typically involves refining a setting of an initial pose through a plurality of optimization steps, thereby achieving an objective of convergence at a real pose. However, if the initial pose deviates too far from the real pose, the optimization process may be limited by local minima, or require a longer time to converge, thereby resulting in inaccurate pose estimation and high system latency. On the other hand, selecting an appropriate initial pose can significantly accelerate convergence, reduce computational burdens, and improve overall estimation accuracy. Therefore, selecting an appropriate initial pose is crucial for ensuring the accuracy and efficiency of the estimation process.

In an optional embodiment, the preset pose comprises a preset translation parameter and a preset rotation parameter of the multiple objects; before step S12, the method further comprises:
S31: determining the preset translation parameter by using point cloud data of each object; and
S32: calculating a similarity between a template in a template set and a reference image by using a preset image metric and/or feature and/or pre-trained model to determine a best-matching object template, and determining the preset rotation parameter according to a rotation parameter corresponding to the object template; wherein the template set contains rotation parameters and corresponding images, and the template set is generated by performing a plurality of uniform samplings on a selected rotation axis. The reference literature Nguyen, V. N., Hu, Y., Xiao, Y., Salzmann, M., & Lepetit, V. Templates for 3d object pose estimation revisited: Generalization to new objects and robustness to occlusions. In Proceedings of the IEEE/CVF conference on computer vision and pattern recognition (CVPR) (pp. 6771-6780). (2022) describes a pose estimation method based on template matching, the entire content disclosed therein being incorporated into the present disclosure by reference. Compared to generating templates by positioning a camera on a hemispherical mesh and fixing a CAD model of an object at a center of a sphere, the method of some embodiments of the present disclosure can use real intrinsic parameters and extrinsic parameters to constitute a fixed virtual camera, and rotate the CAD model of the object in a three-dimensional space by using a uniformly sampled rotation matrix.

Specifically, prior to step S32, the method further comprises:
performing uniform sampling a plurality of times on a selected rotation axis to generate sampling data of a preset sampling quantity; and
rendering, based on a preset camera parameter, a three-dimensional model of an object, an initial translation parameter, and the sampling data of the preset sampling quantity, to generate a set of images of the three-dimensional model at different poses to form said template set.

Specifically, for a given input image *I* (RGBD) and a CAD model M of an object, an objective of coarsely estimating an initial pose is to provide a better starting point **P***ᵢ* close to a global minimum **P,** so as to avoid being limited by local minima and reduce a time cost of the optimization process. The coarse initial object pose is represented by a 4×4 rigid transformation matrix **P***ᵢ*=[**R***ᵢ*,**T***ᵢ*;0,1], wherein **R***ᵢ* is a 3×3 rotation matrix, and **T***ᵢ* is a 3×1 translation vector. **R*ᵢ*** is represented as a quaternion **q***ᵢ*, which can be easily converted into the 3×3 rotation matrix.

An initial translation parameter **T***ᵢ* can be obtained from a depth map *D* of a single camera view: first back-projecting the depth map onto a point cloud in the camera coordinate system. The depth map is represented as *D* (*u, v*)*,* wherein (*u, v*) are pixel coordinates, and *D (u, v)* is a depth value (distance from the camera). The intrinsic parameters of the camera are represented by a camera matrix *K,* which contains focal lengths *fₓ, f_{y}* and a principal point *(cₓ, c_{y}). D (u, v)* may be transformed into 3D coordinates (*x, y, z*) using the following formulas: $x = \frac{\left(u-cx\right)}{{f}_{x}} ⋅ D \left(u, v\right) ,$ $y = \frac{\left(v-cy\right)}{{f}_{y}} ⋅ D \left(u, v\right) ,$ $z = D \left(u, v\right)$

By applying this transformation to each pixel in the depth map, a complete point cloud can be obtained. The 3D point cloud of the corresponding target is extracted using a target segmentation mask. A coarse initial translation parameter **T***ᵢ* can be selected from a 3D point cloud of a target, which can be either a specific point or an average position of all points in the point cloud, thereby providing a reasonable estimated value for the initial translation parameter of the object.

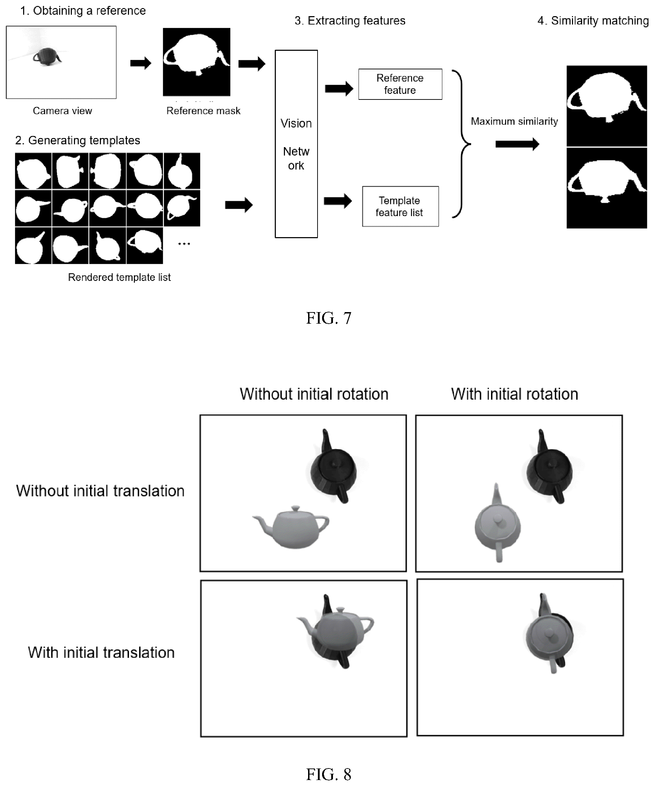

In order to obtain an initial rotation parameter **R***ᵢ* close to a true value, the present embodiment adopts a similarity matching method between a pre-generated template set and a reference image. The template set consists of rendered target images having different rotation poses, wherein a rotation quaternion **q***_{b}* serves as a key value and a corresponding rendered image ***R**_{b}* serves as a numerical value. FIG. 7 illustrates how to retrieve coarse initial rotation parameters. A detailed description of how to generate a target template mask and match it with a target reference mask is provided below:

First, uniform sampling is performed in a three-dimensional space using Euler angles to obtain a set of rotation quaternions ***q_{b}***, wherein quantities of variants along the x-axis, y-axis, and z-axis are denoted as *varᵢ,* and *i* ∈ {*x*, *y*, *z*}. These variants are uniformly distributed at angles along each axis within a range of [0, 360) degrees, and a sampling interval *Δθ* is represented as ${Δθ}_{i} = \frac{360}{{var}_{i}}$, wherein *i* ∈ {*x, y, z*}*.* A Cartesian product of these rotation angles is created to form a comprehensive three-dimensional grid comprising all possible rotation combinations. The Euler angles are converted into a rotation matrix according to the following formulas: $R = {R}_{z} \left(γ\right) {R}_{y} \left(β\right) {R}_{x} \left(α\right)$
wherein *Rₓ, R_{y},* and *R_{z}* are rotation matrices about the *x*-axis, *y*-axis, and *z*-axis, respectively, and *α, β,* and *γ* respectively represent corresponding Euler angles.

Subsequently, these matrices are converted into quaternions **q***_{b}***.** A total number of possible rotations is *J = varₓ × var_{y} × var_{z}.* By combining prior knowledge about a geometry of a target object, different values of *varᵢ* can be distributed on different axes. Specifically, for certain objects with poor directional symmetry, it is necessary to set a larger quantity of variants on corresponding axes. According to experience, for an object lacking symmetry along a specific coordinate axis, a corresponding quantity of variants on the corresponding coordinate axis is typically between 6 and 12, specifically depending on a shape and a volume of unique geometric features of the object.

FIG. 7 is a schematic flowchart of retrieving coarse initial rotation parameters, comprising four steps: obtaining a reference mask, generating templates, feature extraction, and similarity matching. Based on the intrinsic parameters of the camera, a CAD model of the target object, the initial translation parameter ${T}_{i} ∈ {ℝ}^{3}$, and a rotation list ${q}_{b} ∈ {ℝ}^{J \times 4}$, a set of images of the CAD model at different poses are generated using an existing rendering tool. Rendered images **R***_{b}* may comprise a mask, an RGB image, or an RGB-D image with a corresponding mask. The template set is constructed based on the above-mentioned data, wherein a rotation quaternion **q***_{b}* serves as a key value and a corresponding rendered image ***R***_{b} serves as a numerical value. Both a rendered template and a reference mask are cropped around an object center and resized for further matching.

A similarity between the rendered template and the reference mask can be calculated using various metrics, such as traditional image similarity metrics (e.g., Mean Squared Error (MSE), Intersection over Union (IoU), DICE coefficient), handcrafted features (e.g., SIFT, HOG), or learning-based models (e.g., ResNet, VGG). In the method of the present embodiment, a pre-trained VGG network (excluding a classification layer) is used to extract feature maps from **R***_{b}* and ***Rᵢ*.** These feature maps are represented as ***F**_{b}* and ***Fᵣ*** , respectively, and a cosine similarity between them is evaluated through comparison to determine a highest similarity at a feature level. An objective of coarsely estimating the initial rotation parameter is to find an index i of template image ***Rᵢ***, which best matches of the reference mask of ***Rᵣ***. Then, the coarse initial rotation parameter is selected as the rotation quaternion **q***ᵢ*. FIG. 8 shows a visualization result of different initial poses with or without initial translation parameters and initial rotation parameters at the beginning of pose estimation, demonstrating the effectiveness of the initial 6D pose estimation strategy of the present embodiment.

It should be noted that for a plurality of cameras, feature rendering and matching can be performed separately, but a sum of highest similarity values is used to determine a shared coarse initial rotation parameter input. Meanwhile, when the cameras are fixed, the parameters of the cameras are generally invariant, so ***F_{b}*** may be obtained in a one-time offline preprocessing process.

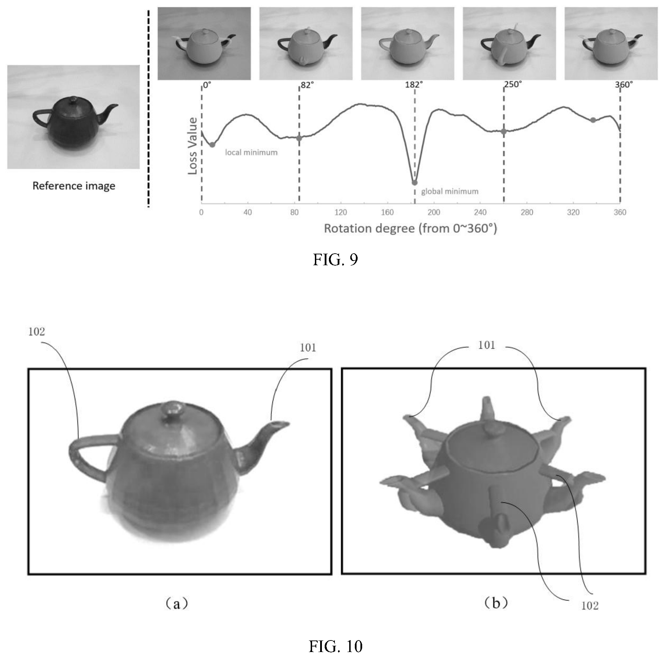

In addition, during an iterative optimization process, when a real object moves rapidly and a current object pose **P** is far from reaching an expected global minimum **P,** the gradient descent method may result in **P̂** being stuck in a local minimum. One prominent problem is large-angle rotation, which may cause optimization failure for objects lacking geometric symmetry. FIG. 9 is a schematic diagram of a large-angle rotation problem during an optimization process. The leftmost image is a reference image used for pose estimation. The right figures sequentially show a relationship between a rotation angle and a loss value when translation parameters are perfect. The white ghosting shows a pose of a digital twin. From an initial pose (0) to an optimal pose (182), a plurality of local minimum traps will appear during the optimization process, and it is difficult for the gradient descent method to solve this problem. To solve this problem, the present embodiment uses a batch optimization strategy, that is, optimizing a batch of mesh replicas having different initial poses instead of a single mesh.

Therefore, prior to step S13, the method further comprises:
S41: obtaining a plurality of replica models of the three-dimensional model of a batch-optimized object, the plurality of replica models having different preset rotation parameters and having different translation parameters and/or rotation parameters;
S42: calculating, by using high-dimensional data that is obtained via rendering from the replica models of the batch-optimized object, to obtain occlusion-aware data corresponding to occlusion information comprising the batch-optimized object; and
S43: calculating a loss value between the high-dimensional segmented pixel data and the occlusion-aware data of the batch-optimized object to determine an object replica model having a minimum loss value, the object replica model being configured to determine a preset pose for a current round of pose estimation.

For each three-dimensional object model under the batch optimization mode, a plurality of replica models are replicated from an original replica mesh *M_{B}* to create a batch of mesh replicas ${M}_{dup} = \left\{\left.{M}_{dup}^{j}={M}_{B}\right|j∈\left\{1,2,…J\right\}\right\}$, wherein *J* is a batch optimization size (batch size) of each three-dimensional model. Each replica is assigned a corresponding initial pose compensation amount ${P}_{Δ}^{j ′}$, which comes from a set ${P}_{Δ}^{′} = \left\{{P}_{Δ}^{j ′}\left|j∈\left\{1,2,…J\right\}\right.\right\}$, the set ${P}_{Δ}^{′}$ comprising a translation compensation matrix ${T}_{Δ}^{j ′} = \left[eye\left(3\right),{t}_{Δ}^{j ′};0,1\right]$ and a rotation compensation matrix ${R}_{Δ}^{j ′}$ (also represented as a quaternion ${q}_{Δ}^{j ′}$). The parameters ${t}_{Δ}^{j ′}$ and ${q}_{Δ}^{j ′}$ can be fixed constants, or can be learnable parameters based on different configurations. Under normal circumstances, the translation compensation parameter ${t}_{Δ}^{j ′}$ is initialized at a geometric center of an object or an origin of an object coordinate system, and the rotation compensation parameter ${q}_{Δ}^{j ′}$ is initialized by uniform sampling in a three-dimensional space as similarly introduced in the template generation section or can be selected from the top K poses with the highest similarity to a current reference image in a template set. In 6D object pose estimation, because rotation estimation is more challenging than translation estimation, the batch optimization strategy is mainly intended to improve accuracy of the rotation estimation. An action of the translation compensation is to help a rotation batch optimization move within a local space, promoting optimization convergence. Based on different learnabilities of translation and rotation offsets, the present embodiment provides three different configurations for ${P}_{Δ}^{′}$:
1) Shared translation, fixed rotation: For all batch sizes *J*, translations of all replicas have the same learnable translation compensation amount ${t}_{Δ}^{j ′}$, while the rotation compensation amounts ${q}_{Δ}^{j ′}$ remain invariant. A pose compensation is represented as: ${P}_{Δ}^{′} = \left\{{P}_{Δ}^{j ′}={R}_{Δ}^{j ′}{T}_{Δ}^{j ′}\left|j∈\left\{1,2,…J\right\}\right.\right\}$
   In this case, the translation compensation can be regarded as a learnable rotation center of a rotated mesh replica.
2) Independent translation, fixed rotation: Each replica has its own set of independent learnable translation parameters, while the rotation compensation amounts ${q}_{Δ}^{j ′}$ remain invariant. A pose compensation is represented as: ${P}_{Δ}^{′} = \left\{{P}_{Δ}^{j ′}={T}_{Δ}^{j ′}{R}_{Δ}^{j ′}\left|j∈\left\{1,2,…J\right\}\right.\right\}$
   In this case, each rotated replica is given an additional translation degree of freedom, enabling it to explore a larger local space.
3) Fully learnable translation and rotation: Both ${t}_{Δ}^{j ′}$ and ${q}_{Δ}^{j ′}$ can be independently learned. A pose compensation is represented as: ${P}_{Δ}^{′} = \left\{{P}_{Δ}^{j ′}={R}_{Δ}^{j ′}{T}_{Δ}^{j ′}\left|j∈\left\{1,2,…J\right\}\right.\right\}$

In this case, each mesh replica can be regarded as an independent mesh, which can freely translate and rotate in a three-dimensional space.

By selecting different configurations according to geometric characteristics of a target object, a balance can be achieved between computational cost and computational accuracy. In some embodiments, configuration 1) can adapt to an object with better rotational symmetry, yielding a faster convergence speed; configurations 2) and 3) can adapt to an object with a complex shape and no symmetry, yielding a higher accuracy upper limit, but slower convergence. FIG. 10b is a visualization effect of an example of a teapot mesh replica used in the batch optimization strategy corresponding to the teapot of FIG. 10a, wherein 101 is a spout, and 102 is a handle. The batch-processed object consists of 6 mesh replicas along the Y-axis.

In the context of batch-optimized pose estimation, an object optimized in a batch mode is referred to as a "batch-optimized object", and other objects in the scene that are not optimized in the batch mode are referred to as "non-batch-optimized objects." Dynamic optimization is performed on a replica having a minimum loss value in a batch to escape a local minimum trap. First, an initial replica model *M_{dup}* of the batch object is transformed by using a global initial pose **P***B̂* and a compensation pose ${P}_{Δ}^{′}$, and a transformation formula is: ${M}_{dup}^{\left({\hat{P}}_{B}, {P}_{Δ}^{′}\right)} = \left\{{\hat{P}}_{B}⋅{P}_{Δ}^{j ′}⋅{M}_{dup}^{j}\left|j∈\left\{1,2,…J\right\}\right.\right\}$

And a model of the non-batch object is transformed, and a transformation formula is: ${M}_{NB}^{{\hat{P}}_{NB}} = \left\{{\hat{P}}_{NB}⋅{M}_{NB}^{j}\left|j∈\left\{1,2,…N\right\}\right.\right\} ,$
wherein *N* is a quantity of the non-batch-optimized objects. Then, by using a differentiable renderer 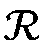 and camera intrinsic parameters *K*, a high-dimensional rendered model ${\hat{A}}_{B} ← R \left({M}_{dup}^{{\hat{P}}_{B} {P}_{Δ}^{′}}, K\right) ∈ {ℝ}^{H ′ \times W ′ \times C \times J}$ of the batch object and another high-dimensional rendered model ${\hat{A}}_{NB} ← R \left({M}_{NB}^{{\hat{P}}_{NB}}, K\right) ∈ {ℝ}^{H ′ \times W ′ \times C \times N}$ of the non-batch object can be generated.

However, when a plurality of objects exist in a scene, occlusion must be considered in loss calculation. Because a pose of an object having replicas may correspond to a pose of any replica in the batch optimization and is unknown, it is very difficult to directly calculate an occlusion relationship between the batch object and other scene objects. This complexity stems from a need to enumerate all possible combinations between all replicas of all batch-optimized objects and all non-batch-optimized objects in the scene to accurately evaluate mutual occlusion among one another.

To solve the above-mentioned problem, in the present embodiment, in one optimization iteration, only a single target object is set to a batch optimization state, and occlusion is calculated separately: first, calculating occlusion-aware high-dimensional data ${\hat{A}}_{B}^{occ}$ where all replicas of the batch-optimized object are occluded by all other non-batch-optimized objects. Then, a loss between the occlusion-aware high-dimensional data and a reference image of the batch-optimized object is calculated, and a replica having a minimum loss value is selected as a best-fitting replica. Furthermore, a pose of the best-fitting replica can be used to determine a pose of the batch-optimized object, and occlusion-aware data of all non-batch-optimized objects ${\hat{A}}_{NB}^{occ}$ can be calculated. The occlusion calculation can refer to the description in the object pose estimation section.

Specifically, a loss function of the batch object can be represented as: ${L}_{batch} = Loss \left({\hat{A}}_{B}^{occ}, {A}_{B}\right)$

The minimum loss and an index of the replica corresponding to the minimum loss in *L_{dup}* can be represented as: ${L}_{best} = min \left(\left\{\left.{L}_{batch}^{j}\right|j∈\left\{1,2,…J\right\}\right\}\right)$ $index = argmin \left(\left\{\left.{L}_{batch}^{j}\right|j∈\left\{1,2,…J\right\}\right\}\right)$
wherein ${L}_{batch}^{j}$ represents an index value of a loss value of each batch j.

Subsequently, a loss of the non-batch-optimized objects is calculated: ${L}_{non - batch} = Loss \left({\hat{A}}_{NB}^{occ}, {A}_{NB}\right)$

A total loss of back-propagation for optimizing learnable parameters **P***_{Δ}, **P**_{B}, **P**_{NB}* can be represented as: $\begin{matrix}{Loss}_{total} = {L}_{best} + {L}_{batch} + {L}_{non - batch} \\ {P}_{Δ} , {P}_{B} , {P}_{NB} = argmin {Loss}_{total}\end{matrix}$

Through this method, a batch object with occlusion information can be effectively incorporated into an optimization process. The pose of the batch object is ultimately determined as ${\hat{P}}_{B} ⋅ {P}_{Δ}^{index}$.

In addition, a single-camera system is often limited by restrictions such as occlusion and a limited field of view, which will seriously affect accuracy of pose estimation. Adopting a multi-camera system can alleviate said problem, because the multi-camera system can obtain different viewing angles of objects, providing complementary information for pose estimation of a plurality of objects. Therefore, step S11 can comprise:
S111: performing surrounding shooting from different angles using a plurality of cameras, so as to reduce pose ambiguity caused by mutual occlusion and self-occlusion of the objects; and
S112: matching real-time object detection data of each camera with each other using three-dimensional point cloud reprojection.

Specifically, step S112 comprises:
obtaining a first image of a first camera and a second image of a second camera, the first image comprising one or more objects, and the second image comprising one or more objects;
determining camera parameters comprising intrinsic parameters of the first camera and the second camera, and extrinsic parameters defining a transformation between a field of view of the first camera and a field of view of the second camera;
reprojecting, based on the determined camera parameters, an image of the first camera into the field of view of the second camera to obtain a reprojected three-dimensional point cloud;
comparing mask information of the one or more objects in the image of the second camera with the re-projected three-dimensional point cloud to determine which object's mask information has a maximum degree of overlap with the re-projected three-dimensional point cloud; and
determining, based on the maximum degree of overlap, that identity information of an object in the image of the first camera and identity information of an object in the image of the second camera match each other.

When using a multi-camera system to perform object detection, a key is to solve a problem of ID mismatching. The problem of ID mismatching occurs when a plurality of cameras detect the same object and a detection model may allocate different IDs to the same object. Because each camera provides an independent viewing angle, the model may be unable to recognize whether detection results under different viewing angles correspond to the same object. For an RGB image or an RGBD image from a single camera view, an existing object detection and segmentation method outputs a dictionary containing detected object information, comprising object IDs, categories, bounding boxes, and masks. To solve the problem of ID mismatching, it is necessary to utilize this information to establish a correspondence relationship between object IDs in different camera views, ensuring that the same object can be consistently recognized in each view. Therefore, it is generally necessary to integrate multi-view object information association technologies, such as triangulation and feature matching. In the present embodiment, an object ID matching algorithm based on point cloud or depth re-projection is utilized, and the algorithm comprises the following steps:

### (1) Camera Calibration

Intrinsic calibration comprises determining internal parameters of a camera, such as a focal length *(fₓ, f_{y}),* a principal point *(cₓ, c_{y}),* and a distortion coefficient *k₁, k₂, p₁, p*₂. These parameters define how the camera projects a real-world 3D image point onto a 2D image plane. The above-mentioned information can generally be loaded from a camera driver API, or calibrated using a pattern such as a chessboard pattern.

An extrinsic matrix determines a position and orientation of the camera relative to a world coordinate system, and the world coordinate system is typically determined by a calibration board (a ChArUco calibration board). The extrinsic parameters comprise a rotation matrix and a translation vector, which describe a transformation from the world coordinate system to a camera coordinate system. Given a 3D point (*X, Y, Z*) in the world coordinate system, its corresponding two-dimensional image point (*u, v*) can be transformed through the following formulas: $\left[\begin{matrix}{X}_{c} \\ {Y}_{c} \\ {Z}_{c}\end{matrix}\right] = R \left[\begin{matrix}X \\ Y \\ Z\end{matrix}\right] + T$ $\left[\begin{matrix}u \\ v\end{matrix}\right] = \left[\begin{matrix}{f}_{x} \frac{{X}_{c}}{{Z}_{c}} + {c}_{x} \\ {f}_{y} \frac{{Y}_{c}}{{Z}_{c}} + {c}_{y}\end{matrix}\right]$
wherein *(X_{c}, Y_{c}, Z_{c})* are coordinates of the point in the camera coordinate system. By solving the above-mentioned formulas using corner points of the ChArUco calibration board, the rotation matrix and the translation vector can be estimated, thereby accurately determining the position and orientation of the camera in the world coordinate system.

For extrinsic calibration of a plurality of cameras, after intrinsic calibration, the ChArUco board is placed within fields of view of all cameras to serve as a common reference object. Each camera captures an image of the calibration board, and a pose (in terms of rotation and translation) of each camera relative to the ChArUco calibration board is estimated from these images. Once the pose of each camera relative to the ChArUco calibration board is determined, a common world coordinate system can be established by selecting one camera as a reference. Then, extrinsic parameters of other cameras are converted into a coordinate system of the reference camera, ensuring that all cameras are aligned within a unified spatial framework.

### (2) Point cloud re-projection and ID matching

For a two-camera setup, a process of converting a depth image of camera 1 into a point cloud involves back-projecting depth values into a 3D coordinate system using intrinsic parameters of camera 1. The point cloud is transformed into a coordinate system of camera 2 by applying an extrinsic transformation between the two cameras. Then, 3D points are re-projected into an image plane of camera 2 using intrinsic parameters of camera 2, thereby generating depth information captured by camera 1 in a view of camera 2.

After points from camera 1 are re-projected onto the image plane of camera 2, ID matching is executed. For each object detected in view 1, a point cloud corresponding to a surface of a target object is extracted using mask information, and corresponding re-projected points in the view of camera 2 are calculated. Then, the re-projected points are compared with a mask of an object detected in view 2. By determining an ID of a mask in view 2 having a maximum degree of overlap with the re-projected point cloud, a correspondence relationship between object IDs in the two camera views is established, ensuring consistent recognition of the same object in both views.

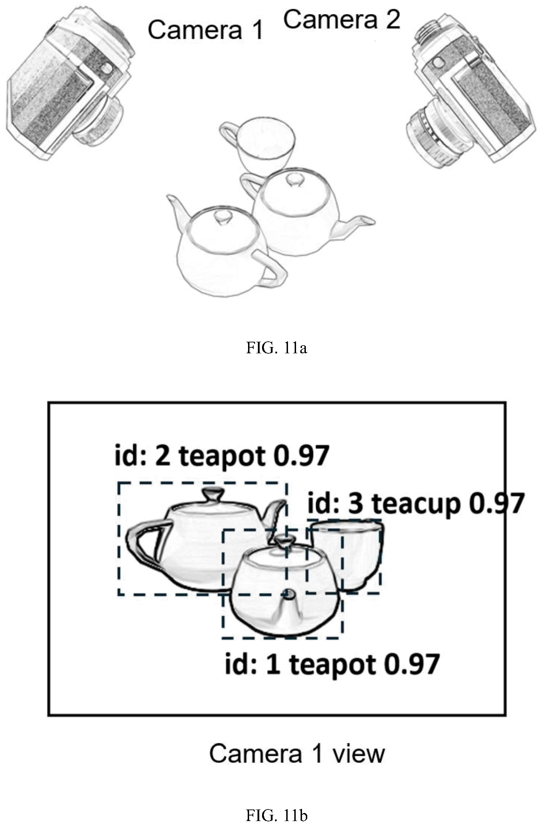

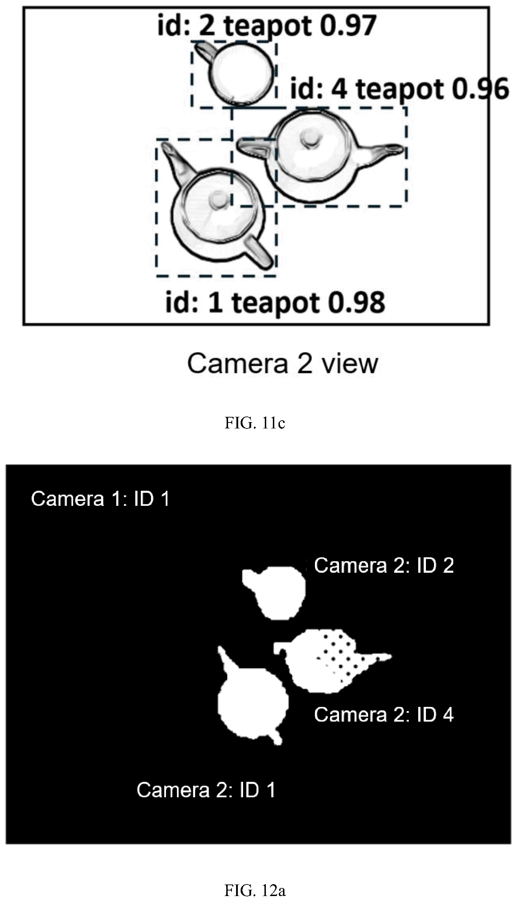

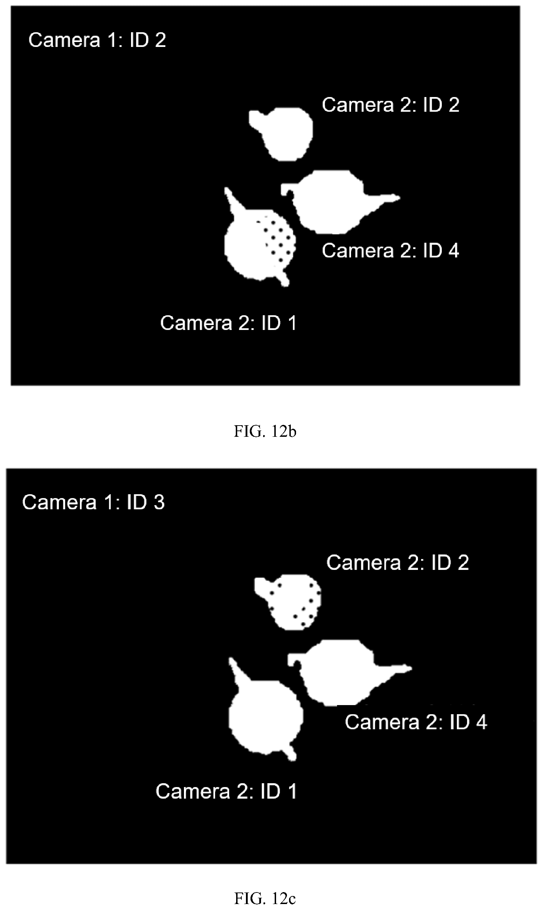

FIGs. 11a-c show setups of a plurality of cameras and detection results of different viewing angles. FIGs. 12a-c show schematic diagrams of a re-projected three-dimensional point cloud from camera view 1 to view 2, and FIG. 12a to FIG. 12c are mask maps. White areas in the images represent different objects, and black points in the images represent re-projected points of a point cloud on a surface of an object with a different ID in view 1 in a viewing angle of camera 2. By checking an overlapping rate with an occlusion mask detected in view 2, a correspondence relationship between object IDs in the two camera views can be determined. In this example, ID (identity identifier) 1 (view 1) matches ID 4 (view 2), ID 2 (view 1) matches ID 1 (view 2), and ID 3 (view 1) matches ID 2 (view 2).

For each object, an ID is known in each camera view, which enables reference images of the object to be obtained from a plurality of angles. In each camera view, a digital twin can be rendered using a shared learnable parameter (representing an object pose), and these rendered images are compared with corresponding reference images to calculate a loss value of said view. By summing the loss values of all camera views, complementary information from a plurality of angles is utilized. Then, the shared learnable parameters are optimized using gradient descent, enabling a pose of the object to be accurately determined by combining data of all camera views.

The real-time pose estimation of the present embodiment is crucial for achieving accurate adaptive robot manipulation, especially in a dynamic environment, because in such an environment, spatial relationships between objects or between an object and a robot may shift or change. For tasks such as pick-and-place, assembly, and bundling, a robot must accurately estimate poses of individual objects as well as interactions between the objects and the robot. This becomes particularly important when managing a plurality of objects or handling complex manipulations (such as mounting an object to or dismounting an object from a robotic end effector).

The real-time pose estimation system provides direct input to a robot control system, enabling it to execute precise movements. For example, when grasping an object, pose data enables the control system to calculate an optimal approach and manipulation strategy, thereby minimizing a risk of collision or slippage. Furthermore, when an object is attached to a robot, the system can utilize a more advanced manipulation strategy, such as treating a composite structure of the object and the robot as a single entity to avoid collisions and perform path planning. For example, the system can bind and combine relative poses of some objects and adopt a superior control strategy; when the robot grasps the object, the composite structure of the robot and the object is treated as a single entity to perform path planning and avoid collisions.

In more complex situations, such as bundling a plurality of objects, a collective pose of a group must be managed while maintaining relative stability of individual objects. Real-time feedback from the robot (such as tactile and proprioceptive data) further enhances this process, enabling the system to detect and compensate for unexpected events, such as slippage, deformation, or external interactions. By combining visual pose tracking and feedback from robot sensors, the system can dynamically adjust its control strategy, ensuring robustness and precision of interactions between objects and the robot. This integration of multimodal data is crucial for improving overall accuracy of manipulation tasks in complex and unpredictable environments.

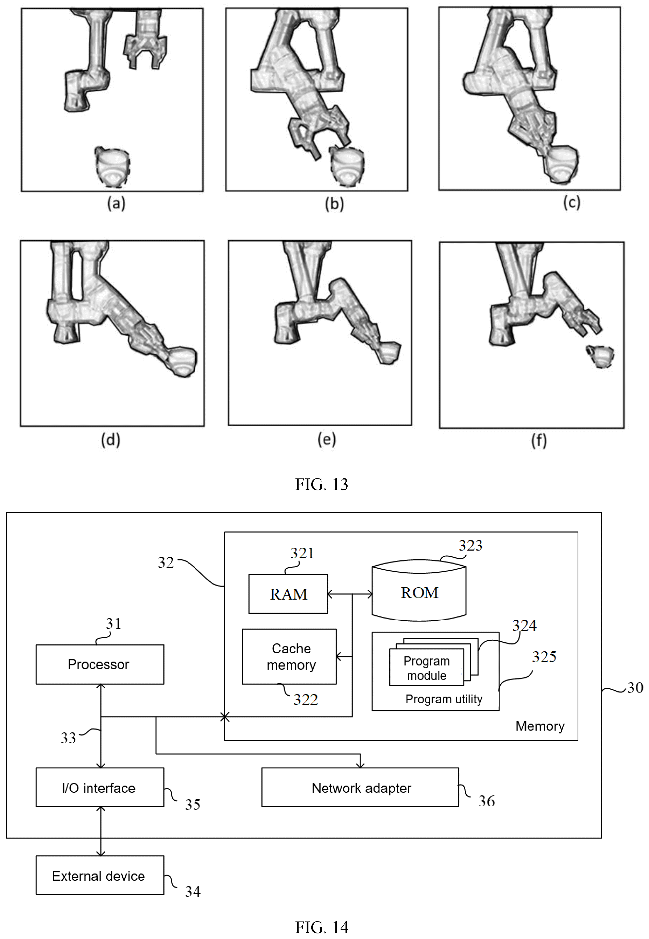

FIG. 13 is a schematic diagram illustrating an effect of interaction between a digital robot and an object during a grasping operation. Herein, a dashed-line teacup indicates that it serves as an individual pose-optimized object, and a solid line indicates that it is fixed to a robotic hand to perform pose estimation as a fixed component on the robotic hand. From (a) to (b), the robotic hand gradually approaches a handle of the teacup. In (c), the robotic hand successfully grasps the teacup and fixes the object onto the robotic hand. From (d) to (e), the pose of the teacup is continuously updated according to its relative position to the robotic hand. In (f), the robotic hand releases the teacup, making it detach from the robotic hand.

The method for estimating poses of multiple objects provided by this example has the following advantages:
1. Corresponding digital twins are created according to high-dimensional data of objects, and their 6D poses are simultaneously optimized during each iteration while considering physical occlusion relationships among the objects, wherein this process is enhanced by integrating RGBXY derivatives and optimal transport. The RGBXY derivatives capture color and spatial variations, thereby achieving robust gradient-based optimization applicable to large-magnitude object transformations, whereas the optimal transport minimizes a cost function, thereby effectively matching RGBXY features even when significant discrepancies exist in object localization. Therefore, the pose estimation method of the present disclosure can reflect real-time poses of all target objects with high fidelity.
2. An initial pose estimation method and a batch optimization strategy can ensure rapid convergence of optimization while escaping local minimum traps during the pose optimization process.
3. Multi-camera stream input is supported, which can alleviate the problem of pose ambiguity caused by occlusion, enabling complex scene-level pose estimation to be handled.
4. Robot pose estimation and object pose estimation are integrated into a unified paradigm, which can be applied to real-time digital twin reconstruction, achieving a closed loop and a real-time feedback process for robot control.

### Example 2

This example further provides a method for controlling a robot, the method comprising:
performing a method for estimating poses of multiple objects in example 1 to obtain pose information of a robot and pose information of a target object;
inputting the pose information of the robot and the pose information of the target object into a control system of the robot; and
controlling, by the control system, an interaction between the robot and the target object according to the input.

The method for controlling a robot provided by the present example, by utilizing the above-mentioned method for estimating multi-object poses, can reflect real-time poses of all target objects with high fidelity, enabling a control system to accurately control the robot to interact with the objects using an optimal strategy, and integrates robot pose estimation and object pose estimation into a unified paradigm, achieving a closed loop and a real-time feedback method for robot control.

### Example 3

The present embodiment provides a system for estimating poses of multiple objects, the system comprising one or more processors configured to perform a method for estimating the poses of the multiple objects in example 1 or a method for controlling the robot in example 2.

For example, the one or more processors may comprise one or more GPUs, one or more CPUs, or any other technically feasible combination of one or more processors such as ASIC chips. In some examples, the one or more processors such as ASIC chips may comprise a memory.

Preferably, the system further comprises one or more cameras configured to obtain video data and/or image data of an object to be estimated.

Preferably, the system further comprises a robot;
the system is configured to perform a method for estimating poses of multiple objects in example 1 to obtain pose information of the robot and pose information of the target object;
the system is configured to control an interaction between the robot and the target object according to the pose information of the robot and the pose information of the target object.

For the example of the system, since it fundamentally corresponds to the example of the method, references may be made to some descriptions in the example of the method for relevant parts thereof. The example of the system described above is merely illustrative, wherein modules described as separate components may or may not be physically separated, and modules displayed as units may or may not be physical units, that is, they may be located in one place, or may be distributed across a plurality of network units. Part or all of the modules therein can be selected according to actual needs to achieve the objective of the solution of the present disclosure. A person of ordinary skill in the art may understand and implement the present disclosure without creative effort.

### Example 4

FIG. 14 is a structural schematic diagram of an electronic device provided by example 4 of the present disclosure. The electronic device comprises a memory, a processor, and a computer program stored in the memory and executable by the processor, wherein the processor, when executing the program, implements the method of example 1 or example 2. The electronic device 30 shown in FIG. 14 is merely an example, and should not impose any limitation on the functions and scope of use of the embodiments of the present disclosure.

As shown in FIG. 14, the electronic device 30 can be represented in a form of a general-purpose computing device, for example, it can be a server device. Components of the electronic device 30 may comprise, but are not limited to: the at least one processor 31 mentioned above, the at least one memory 32 mentioned above, and a bus 33 connecting different system components (including the memory 32 and the processor 31).

The bus 33 comprises a data bus, an address bus, and a control bus.

The memory 32 may comprise a volatile memory, such as a random access memory (RAM) 321 and/or a cache memory 322, and can further comprise a read-only memory (ROM) 323.

The memory 32 may further comprise a program/utility 325 having a set of (at least one) program modules 324, such program modules 324 comprising, but not limited to: an operating system, one or a plurality of application programs, other program modules, and program data, wherein an implementation of a network environment can be comprised in each or a certain combination of these examples.

The processor 31 executes various functional applications as well as data processing, such as the method of example 1 or example 2 of the present disclosure, by running the computer program stored in the memory 32.

The electronic device 30 can also communicate with one or a plurality of external devices 34 (such as a keyboard, a pointing device, etc.). Such communication can be performed through an input/output (I/O) interface 35. Moreover, the device 30 for model generation can also communicate with one or a plurality of networks (such as a local area network (LAN), a wide area network (WAN), and/or a public network, such as the Internet) through a network adapter 36. As shown in the figure, the network adapter 36 communicates with other modules of the device 30 through the bus 33. It should be understood that although not shown in the figure, other hardware and/or software modules can be used in combination with the device 30 for model generation, comprising, but not limited to: microcode, device drivers, redundant processors, external disk drive arrays, RAID (Redundant Array of Independent Disks) systems, tape drives, data backup storage systems, and the like.

It should be noted that although several units/modules or sub-units/modules of the electronic device are mentioned in the detailed description above, such division is merely exemplary and not mandatory. In fact, according to the embodiments of the present disclosure, the features and functions of two or more units/modules described above may be embodied in a single unit/module. Conversely, the features and functions of a single unit/module described above may be further divided to be embodied by a plurality of units/modules.

### Example 5

The present embodiment provides a computer-readable storage medium having a computer program stored thereon, wherein the program, when executed by a processor, performs a method of example 1 or example 2.

Herein, more specific examples of the readable storage medium that can be adopted may comprise, but are not limited to: a portable disk, a hard disk, a random access memory, a read-only memory, an erasable programmable read-only memory (EPROM), an optical storage device, a magnetic storage device, or any suitable combination of the above.

In a possible embodiment, the present disclosure can also be implemented in a form of a program product, which comprises program code, wherein when the program product runs on a terminal device, the program code is used to cause the terminal device to execute and implement the method of example 1 or example 2.

Herein, the program code for executing the present disclosure may be written in any combination of one or a plurality of programming languages, and the program code can be executed entirely on a user device, partly on a user device, as an independent software package, partly on a user device and partly on a remote device, or entirely on a remote device.

Although specific embodiments of the present disclosure have been described above, persons skilled in the art should understand that these are merely illustrative, and various changes or modifications can be made to these embodiments without departing from the principles and essence of the present invention. Therefore, the scope of protection of the present disclosure is defined by the appended claims.

## Claims

1. A method for estimating poses of multiple objects, comprising:
obtaining real-time video data comprising a first image frame of the multiple objects;
obtaining, based on the first image frame, first high-dimensional segmented pixel data, the first high-dimensional segmented pixel data comprising first pixel data of each object, the first pixel data being a three-dimensional or higher-dimensional array;
performing, based on a first preset pose, differentiable rendering on a three-dimensional model of the multiple objects to obtain first high-dimensional data, the first high-dimensional data being a three-dimensional or higher-dimensional array; and
updating, based on minimizing an error between the first high-dimensional segmented pixel data and the first high-dimensional data, the first preset pose to obtain a first object pose.

2. The method for estimating the poses of the multiple objects according to claim 1, wherein the real-time video data further comprises at least a second image frame of the multiple objects;
after the step of obtaining the object pose, the method further comprises:
obtaining, based on the second image frame, second high-dimensional segmented pixel data;
performing, based on the first object pose, differentiable rendering on the three-dimensional model of the multiple objects to obtain second high-dimensional data, the second high-dimensional data being a three-dimensional or higher-dimensional array;
updating, based on minimizing an error between the second high-dimensional segmented pixel data and the second high-dimensional data, the first object pose to obtain a second object pose; and
sequentially updating, based on other image frames of the real-time video data, a pose corresponding to a previous image frame to obtain other object poses.

3. The method for estimating the poses of the multiple objects according to claim 1, wherein the step of obtaining, based on the first image frame, the first high-dimensional segmented pixel data comprises:
segmenting each object in the first image frame via a segmentation algorithm to obtain a mask array; and
obtaining, based on the mask array and channel data of the first image frame, the first high-dimensional segmented pixel data.

4. The method for estimating the poses of the multiple objects according to claim 1, wherein the step of performing, based on the first preset pose, differentiable rendering on the three-dimensional model of the multiple objects to obtain the first high-dimensional data comprises:
transforming, based on a preset pose of the multiple objects, the three-dimensional model of the multiple objects from an object coordinate system into a camera coordinate system according to a learnable pose conversion parameter configured to characterize a real-time pose of the object; and
performing, based on a preset camera parameter, differentiable rendering on the transformed three-dimensional model to obtain the first high-dimensional data.

5. The method for estimating the poses of the multiple objects according to claim 4, wherein after the step of performing differentiable rendering on the three-dimensional model of the multiple objects to obtain the first high-dimensional data, the method further comprises:
calculating occlusion-aware data by using depth information and silhouette information of the first high-dimensional data, the occlusion-aware data comprises occlusion information of the object;
the step of updating, based on minimizing an error between the first high-dimensional segmented pixel data and the first high-dimensional data, the first preset pose to obtain the first object pose comprises:
performing iteration via a gradient descent method to minimize a pixel difference value between the first high-dimensional segmented pixel data and the occlusion-aware data, so as to update the learnable pose conversion parameter.

6. The method for estimating the poses of the multiple objects according to claim 4, wherein the step of performing differentiable rendering on the transformed three-dimensional model to obtain the first high-dimensional data further comprises:
performing differentiable rendering on the transformed three-dimensional model to obtain the first high-dimensional data having a variable silhouette, a range of the variable silhouette being determined based on a degree of difference between the first pixel data and the preset pose.

7. The method for estimating the poses of the multiple objects according to claim 4, wherein the step of performing differentiable rendering on the transformed three-dimensional model to obtain the first high-dimensional data comprises:
performing, based on a first RGBXY derivative, differentiable rendering on the transformed three-dimensional model, and
mapping and matching pixels between the first high-dimensional data and the first high-dimensional segmented pixel data through optimal transport to obtain a second RGBXY derivative of the first high-dimensional segmented pixel data, both the first RGBXY derivative and the second RGBXY derivative comprising information of color changes and spatial position changes.

8. The method for estimating the poses of the multiple objects according to claim 7, wherein the step of updating, based on minimizing an error between the first high-dimensional segmented pixel data and the first high-dimensional data, the first preset pose to obtain the first object pose comprises:
minimizing, based on optimal transport, a pixel-level difference value between the second RGBXY derivative of the first high-dimensional segmented pixel data and the first RGBXY derivative of the first high-dimensional data; and
updating, based on minimizing the pixel-level difference value between the second RGBXY derivative of the first high-dimensional segmented pixel data and the first RGBXY derivative of the first high-dimensional data, the first preset pose to obtain the first object pose.

9. The method for estimating the poses of the multiple objects according to claim 4, wherein the object comprises a robot; the pose conversion parameter comprises a joint angle of the robot;
the step of transforming, based on a preset pose of the multiple objects, the three-dimensional model of the multiple objects into a camera coordinate system according to a learnable pose conversion parameter comprises:
transforming, based on a preset pose and a preset joint angle of the robot, three-dimensional models of various components of the robot from respective object coordinate systems of the various components into the camera coordinate system by calculating a robot forward kinematics matrix;
the step of performing, based on the preset camera parameter, differentiable rendering on the transformed three-dimensional model to obtain the first high-dimensional data comprises:
performing, based on the preset camera parameter, differentiable rendering on the transformed three-dimensional model of the robot to obtain the first high-dimensional data.

10. The method for estimating the poses of the multiple objects according to claim 4, wherein the preset pose comprises a preset translation parameter and a preset rotation parameter of the multiple objects;
before the step of transforming the three-dimensional model of the multiple objects from the object coordinate system into the camera coordinate system according to the learnable pose conversion parameter, the method further comprises:
determining the preset translation parameter by using point cloud data of each object; and
calculating, by using a preset image metric and/or feature and/or pre-trained model, a similarity between a template in a template set and a reference image to determine a best-matching object template, and determining the preset rotation parameter according to a rotation parameter corresponding to the object template;
wherein the template set comprises rotation parameters and corresponding images, and the template set is generated by performing a plurality of uniform samplings on a selected rotation axis.

11. The method for estimating the poses of the multiple objects according to claim 10, wherein before the step of calculating the similarity between the template in the template set and the reference image to determine the best-matching object template, the method further comprises:
performing uniform sampling a plurality of times on a selected rotation axis to generate sampling data with a preset sampling quantity; and
rendering, based on a preset camera parameter, a three-dimensional model of an object, an initial translation parameter, and the sampling data of the preset sampling quantity, to generate a set of images of the three-dimensional model at different poses to form the template set.

12. The method for estimating the poses of the multiple objects according to claim 10, wherein before the step of performing differentiable rendering on the three-dimensional model of the multiple objects to obtain the first high-dimensional data, the method further comprises:
obtaining a plurality of replica models of the three-dimensional model of a batch-optimized object, the plurality of replica models having different preset rotation parameters and having different translation parameters and/or rotation parameters;
calculating, by using high-dimensional data that is obtained via rendering from the replica models of the batch-optimized object, to obtain occlusion-aware data corresponding to occlusion information, wherein the occlusion information comprises the batch-optimized object; and
calculating a loss value between the high-dimensional segmented pixel data and the occlusion-aware data of the batch-optimized object to determine an object replica model having a minimum loss value, the object replica model being configured to determine a preset pose for a current round of pose estimation.

13. The method for estimating the poses of the multiple objects according to claim 1, wherein the step of obtaining the real-time video data comprises:
performing surrounding shooting from different angles using a plurality of cameras, so as to reduce pose ambiguity caused by mutual occlusion and self-occlusion of the objects; and
matching real-time object detection data of each camera with each other via three-dimensional point cloud reprojection to obtain the real-time video data.

14. The method for estimating the poses of the multiple objects according to claim 13, wherein the step of matching real-time object detection data of each camera with each other using three-dimensional point cloud reprojection comprises:
obtaining a first image of a first camera and a second image of a second camera, the first image comprising one or more objects, and the second image comprising one or more objects;
determining camera parameters comprising intrinsic parameters of the first camera and the second camera, and extrinsic parameters defining a transformation between a field of view of the first camera and a field of view of the second camera;
reprojecting, based on the determined camera parameters, a depth image or three-dimensional point cloud data of the first camera into the field of view of the second camera to obtain a corresponding reprojected two-dimensional point group;
comparing mask information of the one or more objects in an image of the second camera with the reprojected two-dimensional point group to determine which object's mask information has a maximum degree of overlap with the reprojected two-dimensional point group; and
determining, based on the maximum degree of overlap, that identity information of an object in an image of the first camera and identity information of an object in the image of the second camera match each other.

15. A method for controlling a robot, comprising:
performing a method for estimating the poses of the multiple objects according to any one of claims 1 to 14 to obtain pose information of a robot and pose information of a target object;
inputting the pose information of the robot and the pose information of the target object into a control system of the robot; and
controlling, by the control system, an interaction between the robot and the target object according to the input.

16. A computer program product, comprising a computer program, wherein the computer program, when executed by one or more processors, performs a method for estimating the poses of the multiple objects according to any one of claims 1 to 14 or a method for controlling the robot according to claim 15.

17. A system for estimating poses of multiple objects, comprising:
one or more processors configured to perform a method for estimating the poses of the multiple objects according to any one of claims 1 to 14 or a method for controlling the robot according to claim 15.

18. The system for estimating the poses of the multiple objects according to claim 17, wherein the system further comprises one or more cameras configured to acquire video data and/or image data of an object to be estimated.

19. The system for estimating the poses of the multiple objects according to claim 17, wherein the system further comprises a robot;
wherein the system is configured to perform a method for estimating the poses of the multiple objects according to any one of claims 1 to 14 to obtain pose information of the robot and pose information of a target object; and
wherein the system is configured to control an interaction between the robot and the target object according to the pose information of the robot and the pose information of the target object.

20. An electronic device, comprising a memory, a processor, and a computer program stored in the memory and executable by the processor, wherein the processor, when executing the computer program, performs a method for estimating the poses of the multiple objects according to any one of claims 1 to 14 or a method for controlling the robot according to claim 15.

21. A computer-readable medium having a computer instruction stored thereon, wherein the computer instruction, when executed by a processor, performs a method for estimating the poses of the multiple objects according to any one of claims 1 to 12 or a method for controlling the robot according to claim 15.

22. A computer program, wherein the computer program, when executed by one or more processors, is configured to perform a method for estimating the poses of the multiple objects according to any one of claims 1 to 14 or a method for controlling the robot according to claim 15.
